# FASCICULE DE BREVET EUROPEEN

(11) **EP 3 714 190 B1**
(45) Date de publication et mention de la délivrance du brevet: **03.01.2024**
(21) Numéro de dépôt: 18808447.9
(22) Date de dépôt: 05.11.2018
(51) Int. Cl.: F16K 15/02, F16K 15/14, F16K 27/02

(54) **DISPOSITIF ANTI-RETOUR DE FLUIDE MONOBLOC DANS UN AERONEF ET PROCEDE DE FABRICATION D'UN TEL DISPOSITIF**
EINTEILIGE FLÜSSIGKEITSRÜCKSCHLAGVORRICHTUNG FÜR FLUGZEUG UND VERFAHREN ZUR HERSTELLUNG SOLCH EINER VORRICHTUNG
AIRCRAFT ONE-PIECE FLUID NONRETURN DEVICE AND METHOD FOR MANUFACTURING SUCH A DEVICE

(30) Priorité: 21.11.2017 FR 1760998
(43) Date de publication de la demande: 30.09.2020
(73) Titulaire: Zodiac Aerotechnics, 42230 Roche La Moliere (FR)
(72) Inventeur: CORMAN, François, 69003 Lyon (FR)
(74) Mandataire: Delprat, Olivier
(86) Numéro de dépôt international: PCT/FR2018/052713
(87) Numéro de publication internationale: WO 2019/102089

(56) Documents cités:
- FR-A1- 2 777 229
- US-A- 1 886 205
- US-A- 3 346 009
- US-A- 3 667 495
- US-A- 4 209 485
- US-A1- 2008 210 898
- US-A1- 2017 191 567

## Description

### DOMAINE TECHNIQUE

La présente invention concerne le domaine technique de la circulation de carburant dans un aéronef, tel qu'un avion, un hélicoptère ou autre, et concerne plus particulièrement un dispositif anti-retour apte à être installé dans le circuit, et un procédé de fabrication dudit dispositif.

### ART ANTERIEUR

Il est connu de l'état de la technique des dispositifs anti-retour de type clapet à bille, à soupape ou similaire. Leur fonctionnement consiste à autoriser un fluide, par exemple du carburant, à circuler seulement dans un sens au travers d'un conduit. Tous ces dispositifs comprennent plusieurs composants. Notamment, ils comprennent un élément élastique de type ressort qui pousse un élément bloquant, tel qu'une bille, une soupape etc. dans une position d'obturation. Ainsi, le fluide, sous une certaine pression, peut s'écouler à l'encontre de l'élément bloquant en compressant le ressort, mais son retour est bloqué par ledit élément bloquant.

Ce type de dispositif anti-retour présente généralement l'inconvénient que les composants qui le composent ne permettent pas d'assurer une continuité électrique entre eux. Pour éviter l'apparition d'une charge électrostatique, risque d'explosion dans le domaine de l'aéronautique, il est nécessaire de connecter les composants entre eux, par exemple avec des fils conducteurs, ou de mettre en oeuvre des protections et des traitements de surface additionnels, complexifiant davantage le procédé de fabrication, et augmentant de fait son coût.

En outre, la fabrication de ce type de dispositif anti-retour implique des opérations de montage et d'assemblage, et l'utilisation de composants supplémentaires, tels que des vis, rondelles, joints, etc. et/ou des opérations spécifiques, telles que des opérations de sertissage, etc. exigeant des outillages et machines adaptés.

Il en résulte que la conception et la fabrication de ce type de dispositif anti-retour est longue, coûteuse et fastidieuse.

Au surplus, les formes disponibles de ressort sont limitées. Ainsi le concepteur dispose d'un choix limité de caractéristiques du ressort, tel que par exemple sa raideur ou progressivité.

Les documents US 4 209 485 A et US 3 346 009 A divulguent des dispositifs anti-retour connus.

### EXPOSE DE L'INVENTION

L'un des buts de l'invention est donc de remédier à ces inconvénients en proposant un dispositif anti-retour de carburant qui soit de conception simple et peu onéreuse, et dont la continuité électrique est optimale.

Un autre objectif de l'invention est de fournir un tel dispositif anti-retour présentant un choix élargi de caractéristiques et de comportements élastiques pour améliorer ainsi la performance du dispositif, par exemple en répondant mieux à la problématique de vibration et de résonance.

Afin de résoudre les problèmes précités, il a été mis au point, un dispositif anti-retour de carburant selon la revendication 1.

De cette manière, le dispositif anti-retour est monobloc de sorte que la continuité électrique est assurée d'une manière optimale. Le dispositif est plus sécurisée et plus simple à installer. Le risque de corrosion intermétallique, telle que par exemple entre l'acier inoxydable ou l'aluminium, est ainsi minimisé, voire supprimé.

Selon d'autres caractéristiques avantageuses, prises séparément ou en combinaison :
- le corps, l'organe élastique de rappel et le clapet sont réalisés en matière plastique ;
- le corps, l'organe élastique de rappel et le clapet sont réalisés en métal ;
- un joint d'étanchéité est disposé dans un siège ménagé autour de l'ouverture ou autour du clapet pour assurer l'étanchéité entre le clapet et le corps ;
- le rebord incliné du clapet présente une rainure annulaire périphérique formant le siège du joint d'étanchéité ;
- le corps présente une conformation tubulaire définissant une enceinte entre une ouverture amont et une ouverture aval, l'organe élastique de rappel prolongeant la paroi interne de l'enceinte à partir de l'ouverture aval et s'étend pour que le clapet obture l'ouverture amont.

De cette manière l'invention propose un dispositif anti-retour qui est simple, peu onéreux et offrant plus de possibilités d'adaptation pendant la conception.

L'invention concerne également un procédé de fabrication du dispositif anti-retour. Selon l'invention, il consiste à fabriquer, couche par couche et par fabrication additive, le corps, l'organe élastique de rappel et le clapet, de sorte que le corps, l'organe élastique de rappel et le clapet forment ensemble une seule pièce monobloc. Le dispositif est fabriqué de sorte que :
- le corps définit une enceinte destinée à recevoir un carburant, et présente au moins une ouverture ;
- l'enceinte présente une paroi interne prolongée par l'organe élastique de rappel ;
- l'organe élastique de rappel est prolongé par le clapet et pousse ledit clapet dans une position d'obturation de l'ouverture pour empêcher le carburant présent dans l'enceinte de s'évacuer par l'ouverture.

### BREVE DESCRIPTION DES DESSINS

D'autres caractéristiques et avantages de l'invention ressortiront clairement de la description qui en est réalisée ci-après, à titre indicatif et nullement limitatif, en référence aux figures annexées, dans lesquelles :
- la figure 1 est une représentation schématique en coupe longitudinale du dispositif anti-retour selon l'invention ;
- la figure 2 est une représentation schématique en coupe longitudinal d'un dispositif anti-retour, selon un mode de réalisation qui ne fait pas partie de la présente invention.

### EXPOSE DETAILLE DE L'INVENTION

L'invention concerne un dispositif (1) anti-retour de carburant apte à être installé dans un circuit de carburant dans un aéronef.

Le dispositif (1) selon l'invention est fabriqué en matériau composite, en métal, en céramique, en acier inoxydable, en plastique, ou en toute matière appropriée, et couche par couche, par une technique de fabrication additive. Le métal est préféré pour sa compatibilité avec le carburant.

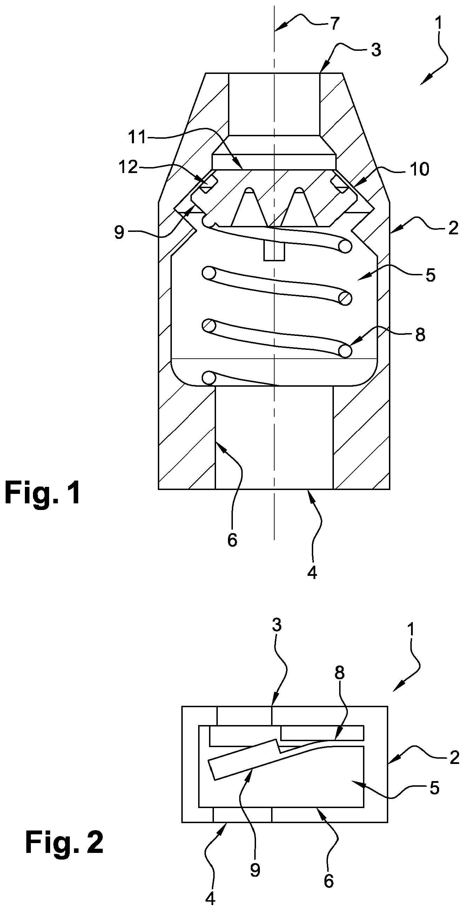

Selon un premier mode de réalisation de l'invention, illustré à la figure 1, le dispositif (1) comprend un corps (2) sensiblement cylindrique, allongé et symétrique axialement. Le corps (2) présente à ses extrémités deux ouvertures, une en amont (3), l'autre en aval (4). Le corps (2) définit une enceinte (5) destinée à recevoir le carburant qui peut s'écouler de l'ouverture amont (3) vers l'ouverture aval (4), mais dont le retour vers l'ouverture amont (3) est empêché, tel qu'il sera expliqué plus en détail ci-après. Les termes « amont » et « aval » sont en rapport avec la direction d'écoulement du carburant autorisée par le dispositif (1) anti-retour.

L'enceinte (5) présente une paroi interne (6) avec une conformation tubulaire selon l'axe longitudinal central (7), et présente un diamètre variable le long du dispositif (1).

La paroi interne (6) est prolongée par un organe élastique de rappel (8) formant partie intégrante avec ladite paroi interne (6). Selon ce premier mode de réalisation, l'organe élastique de rappel (8) est un ressort hélicoïdal. Le ressort (8) est prolongé par un clapet (9) formant partie intégrante avec ledit ressort (8). Autrement dit, la paroi interne (6), le ressort (8) et le clapet (9) forme un ensemble monobloc. Le ressort (8) prolonge la paroi interne (6) à partir de l'ouverture aval (4) et s'étend pour que le clapet (9) obture l'ouverture amont (3).

Bien entendu, le ressort (8) peut présenter des formes différentes que celle représentée, par exemple le ressort (8) peut comprendre un diamètre variable le long de l'axe central (7).

Le fil constituant le ressort (8) peut également présenter un diamètre variable le long du ressort (8) pour avoir avantageusement une caractéristique progressive. Ainsi le ressort (8) peut avoir une courbe d'ouverture non-linéaire, permettant de mieux répondre à certaines exigences telles que le bon comportement sous vibrations.

La paroi interne (6) présente également un siège (10) pour le clapet (9). Lorsque le dispositif (1) est fabriqué en métal, le siège (10) du clapet (9) présente avantageusement une conformation conique en amont, avec son diamètre plus grand situé en aval. La partie amont du clapet (9) présente une conformation conique complémentaire. En effet, les conformations coniques permettent de faciliter l'opération de fabrication additive et évitent que le siège (10) s'effondre sous son poids. En revanche, si le dispositif est fabriqué en plastique par exemple, la confirmation conique n'est pas nécessaire et le siège (10), selon un mode de réalisation qui ne fait pas partie de la présente invention, peut être réalisé sous la forme d'un épaulement orthogonal par rapport à l'axe central (7).

Selon la présente invention, la paroi du siège (10) et le rebord complémentaire du clapet (9) définissent un angle compris entre 30 et 60 degrés par rapport à l'axe central (7). Au niveau de l'extrémité amont (11) du clapet (9), un jeu radial est présent entre le clapet (9) et la paroi interne (6). Le jeu est inférieur à 0.2 mm, par exemple égal à 0.1 mm. Egalement, un jeu est présent entre les parois inclinées du clapet (9) et de la paroi interne (6), et est inférieur à 0.6 mm, par exemple égal à 0.495 mm. Le siège (10) du clapet (9) présente également une partie située en aval avec une conformation conique, mais avec un diamètre plus petit en aval qu'en amont. Le clapet (9) présente une conformation complémentaire. Ainsi lorsque le clapet (9) est déplacé vers l'ouverture aval (4), à l'encontre du ressort (8), il est apte à prendre appui contre la partie conique de la paroi (6). La course du clapet (9) est ainsi limitée et le ressort (8) est protégé contre le dépassement du seuil de plastification par exemple. Comme déjà évoqué, la conformation conique facilite la fabrication d'une pièce métallique, et n'est pas nécessaire avec une pièce plastique, selon un mode de réalisation qui ne fait pas partie de la présente invention.

Pour assurer une étanchéité dans la position fermée, le clapet (9) présente un siège (12) sous forme d'une rainure annulaire périphérique ménagée sur la circonférence du clapet (9), pour la réception d'un joint d'étanchéité. Le joint d'étanchéité (non représenté) peut être, par exemple, un joint torique en fluorosilicone. Bien entendu, le joint d'étanchéité peut alternativement être disposé dans une gorge formée dans la paroi interne (6). Le joint d'étanchéité présente une dimension supérieure au jeu radial présent entre le clapet (9) et la paroi interne (6), afin d'assurer l'étanchéité. Le joint d'étanchéité est positionné après la fabrication du dispositif (1).

Au repos, le ressort (8) pousse le clapet (9) contre le siège (10). Ainsi, le joint d'étanchéité est pressé contre la paroi (6) et empêche le retour de carburant vers l'ouverture amont (3). Pour pénétrer à l'intérieur du dispositif (1) par l'ouverture amont (3), le carburant exerce une pression sur le clapet (9). Lorsque la pression est suffisante, le ressort (8) est compressé et le carburant peut s'écouler dans l'enceinte (5), à travers l'espace entre la paroi (6) et le clapet (9) et vers l'ouverture aval (4). Bien entendu, le niveau de pression nécessaire est déterminé par la raideur du ressort (8).

Lorsque la pression exercée en amont est inférieure à un certain seuil, le clapet (9) est poussé contre le siège (10) du clapet (9), notamment par le ressort (8) et éventuellement une pression interne. Le joint d'étanchéité est en appui contre la paroi interne (6) et empêche le retour de carburant au travers de l'ouverture amont (3).

En référence à la figure 2, et selon un mode de réalisation qui ne fait pas partie de la présente invention, l'organe élastique de rappel est un ressort (8) à lame. Le ressort (8) à lame prolonge latéralement la paroi interne (6), et est prolongé par le clapet (9), avec la paroi (6), le ressort (8) à lame et le clapet (9) formant un ensemble monobloc.

Bien entendu, le ressort (8) à lame peut être réalisé de toute manière appropriée, par exemple par un lame unique ou par deux lames, une de chaque côté du clapet (9), etc. Le(s) lame(s) peuvent avoir une section variable pour mieux adapter le comportement élastique du ressort (8) aux besoins.

D'une manière avantageuse, le procédé de fabrication du dispositif (1) selon l'invention consiste à fabriquer, couche par couche et par fabrication additive, le corps (2), l'organe élastique de rappel (8) et le clapet (9), de sorte que le corps (2), l'organe élastique de rappel (8) et le clapet (9) forment ensemble une seule pièce monobloc, le dispositif (1) étant fabriqué de sorte que :
- le corps (2) définit une enceinte (5) destinée à recevoir un carburant, et présente au moins une ouverture (3) ;
- l'enceinte (5) présente une paroi interne (6) prolongée par l'organe élastique de rappel (8) ;
- l'organe élastique de rappel est prolongé par le clapet (9) et pousse ledit clapet (9) dans une position d'obturation de l'ouverture (3) pour empêcher le carburant présent dans l'enceinte (5) de s'évacuer par l'ouverture (3).

Ainsi, le dispositif (1) selon l'invention est monobloc. En d'autres termes, il n'y a qu'une seule pièce à gérer du point de vue conception, validation, fabrication, approvisionnement, stockage. La fabrication est simple, rapide et peu onéreuse. De plus, étant donné que le dispositif (1) est formé en une seule pièce, sans moyens de fixation, la continuité électrique est optimale, le dispositif est plus léger, et le risque de corrosion intermétallique est minimisé, voir supprimé.

L'invention permet d'éviter les opérations de manutention et d'assemblage, ainsi que d'améliorer la répétabilité du procédé.

## Revendications

1. Dispositif (1) anti-retour de carburant comprenant un corps (2) définissant une enceinte (5) destinée à recevoir un carburant, et présentant au moins une ouverture (3), l'enceinte (5) présente une paroi interne (6) prolongée par un organe élastique de rappel (8) formant partie intégrante avec ladite paroi interne (6), ledit organe élastique de rappel (8) est prolongé par un clapet (9) formant partie intégrante avec ledit organe élastique de rappel (8), l'organe élastique de rappel (8) pousse le clapet (9) dans une position d'obturation de l'ouverture (3) pour empêcher le carburant présent dans l'enceinte (5) de s'évacuer par l'ouverture (3), **caractérisé en ce que** :
le dispositif est fabriqué, couche par couche et par fabrication additive, de sorte que le corps (2), l'organe élastique de rappel (8) et le clapet (9) forment ensemble une seule pièce monobloc ;
l'organe élastique de rappel (8) est un ressort hélicoïdal de compression ;
l'ouverture (3) présente une paroi périphérique inclinée, le clapet (9) présentant un rebord complémentaire incliné, la paroi interne (6) ayant une conformation tubulaire selon un axe longitudinal central (7), l'enceinte (5) présentant un diamètre variable le long du dispositif (1), la paroi interne (6) présentant un siège (10) pour le clapet (9), le siège (10) du clapet (9) présentant une conformation conique en amont, avec son diamètre plus grand situé en aval, la partie amont du clapet (9) présentant une conformation conique complémentaire, la paroi du siège (10) et le rebord complémentaire du clapet (9) définissant un angle compris entre 30 et 60 degrés par rapport à l'axe central (7).

2. Dispositif (1) selon la revendication 1 **caractérisé en ce que** le corps (2), l'organe élastique de rappel (8) et le clapet (9) sont réalisés en matière plastique.

3. Dispositif (1) selon la revendication 1 **caractérisé en ce que** le corps (2), l'organe élastique de rappel (8) et le clapet (9) sont réalisés en métal.

4. Dispositif (1) selon la revendication 1 **caractérisé en ce qu'**un joint d'étanchéité est disposé dans un siège (12) ménagé autour de l'ouverture (3) ou autour du clapet (9) pour assurer l'étanchéité entre le clapet (9) et le corps (2).

5. Dispositif (1) selon la revendication 1, **caractérisé en ce que** le rebord incliné du clapet (9) présente une rainure annulaire périphérique formant le siège (12) d'un joint d'étanchéité.

6. Dispositif (1) selon la revendication 1, **caractérisé en ce que** le corps (2) présente une conformation tubulaire définissant une enceinte (5) entre une ouverture aval (4) et une ouverture amont (3), l'organe élastique de rappel (8) prolongeant la paroi interne (6) de l'enceinte (5) à partir de l'ouverture aval (4) et s'étend pour que le clapet (9) obture l'ouverture amont (3).

7. Procédé de fabrication d'un dispositif (1) anti-retour de carburant selon l'une des revendications 1 à 6, **caractérisé en ce qu'**il consiste à fabriquer, couche par couche et par fabrication additive, le corps (2), l'organe élastique de rappel (8) et le clapet (9), de sorte que le corps (2), l'organe élastique de rappel (8) et le clapet (9) forment ensemble une seule pièce monobloc, le dispositif (1) étant fabriqué de sorte que :
- le corps (2) définit une enceinte (5) destinée à recevoir un carburant, et présente au moins une ouverture (3) ;
- l'enceinte (5) présente une paroi interne (6) prolongée par l'organe élastique de rappel (8) ;
- l'organe élastique de rappel est prolongé par le clapet (9) et pousse ledit clapet (9) dans une position d'obturation de l'ouverture (3) pour empêcher le carburant présent dans l'enceinte (5) de s'évacuer par l'ouverture (3).

## Patentansprüche

1. Kraftstoff-Rückschlagvorrichtung (1), umfassend einen Körper (2), der einen abgeschlossenen Raum (5) definiert, der dazu bestimmt ist, einen Kraftstoff zu empfangen, und mindestens eine Öffnung (3) aufweist, wobei der abgeschlossene Raum (5) eine Innenwand (6) aufweist, die durch ein elastisches Rückstellorgan (8) verlängert ist, welches einen festen Bestandteil mit der Innenwand (6) bildet, wobei das elastische Rückstellorgan (8) durch eine Klappe (9) verlängert ist, die einen festen Bestandteil mit dem elastischen Rückstellorgan (8) bildet, wobei das elastische Rückstellorgan (8) die Klappe (9) in eine Verschlussposition der Öffnung (3) schiebt, um zu verhindern, dass der in dem abgeschlossenen Raum (5) vorhandene Kraftstoff durch die Öffnung (3) entweicht, **dadurch gekennzeichnet, dass**:
die Vorrichtung Schicht für Schicht und durch additive Fertigung hergestellt wird, sodass der Körper (2), das elastische Rückstellorgan (8) und die Klappe (9) gemeinsam ein einziges Teil in einem Stück bilden;
das elastische Rückstellorgan (8) eine Kompressionsspiralfeder ist;
die Öffnung (3) eine geneigte Umfangswand aufweist, die Klappe (9) eine ergänzenden geneigten Rand aufweist, die Innenwand (6) eine röhrenförmige Gestaltung entlang einer Längsmittelachse (7) aufweist, der abgeschlossene Raum (5) einen variablen Durchmesser entlang der Vorrichtung (1) aufweist, wobei die Innenwand (6) einen Sitz (10) für die Klappe (9) aufweist, wobei der Sitz (10) der Klappe (9) stromaufwärts gelegen eine konische Gestaltung aufweist, deren größerer Durchmesser sich stromabwärts gelegen befindet, wobei der stromaufwärts gelegene Teil der Klappe (9) eine ergänzende konische Gestaltung aufweist, die Wand des Sitzes (10) und der ergänzende Rand der Klappe (9) einen Winkel definieren, der zwischen 30 und 60 Grad in Bezug auf die Mittelachse (7) liegt.

2. Vorrichtung (1) nach Anspruch 1, **dadurch gekennzeichnet, dass** der Körper (2), das elastische Rückstellorgan (8) und die Klappe (9) aus Kunststoffmaterial hergestellt sind.

3. Vorrichtung (1) nach Anspruch 1, **dadurch gekennzeichnet, dass** der Körper (2), das elastische Rückstellorgan (8) und die Klappe (9) aus Metall hergestellt sind.

4. Vorrichtung (1) nach Anspruch 1, **dadurch gekennzeichnet, dass** eine Dichtung in einem Sitz (12) angeordnet ist, der um die Öffnung (3) oder um die Klappe (9) herum eingerichtet ist, um für die Dichtung zwischen der Klappe (9) und dem Körper (2) zu sorgen.

5. Vorrichtung (1) nach Anspruch 1, **dadurch gekennzeichnet, dass** der geneigte Rand der Klappe (9) eine ringförmige Umfangsnut aufweist, die den Sitz (12) einer Dichtung bildet.

6. Vorrichtung (1) nach Anspruch 1, **dadurch gekennzeichnet, dass** der Körper (2) eine röhrenförmige Gestaltung aufweist, die einen abgeschlossenen Raum (5) zwischen einer stromabwärts gelegenen Öffnung (4) und einer stromaufwärts gelegenen Öffnung (3) definiert, wobei das elastische Rückstellorgan (8) die Innenwand (6) des abgeschlossenen Raumes (5) ab der stromabwärts gelegenen Öffnung (4) verlängert, und sich erstreckt, damit die Klappe (9) die stromaufwärts gelegene Öffnung (3) verschließt.

7. Verfahren zur Herstellung einer Kraftstoff-Rückschlagvorrichtung (1) nach einem der Ansprüche 1 bis 6, **dadurch gekennzeichnet, dass** es darin besteht, Schicht für Schicht und durch additive Fertigung den Körper (2), das elastische Rückstellorgan (8) und die Klappe (9) herzustellen, sodass der Körper (2), das elastische Rückstellorgan (8) und die Klappe (9) gemeinsam ein einziges Teil in einem Stück bilden, wobei die Vorrichtung (1) hergestellt wird, sodass:
- der Körper (2) einen abgeschlossenen Raum (5) definiert, der dazu bestimmt ist, einen Kraftstoff zu empfangen, und mindestens eine Öffnung (3) aufweist;
- der abgeschlossene Raum (5) eine Innenwand (6) aufweist, die durch das elastische Rückstellorgan (8) verlängert ist;
- das elastische Rückstellorgan durch die Klappe (9) verlängert ist, und die Klappe (9) in eine Verschlussposition der Öffnung (3) schiebt, um zu verhindern, dass der in dem abgeschlossenen Raum (5) vorhandene Kraftstoff durch die Öffnung (3) entweicht.

## Claims

1. A fuel nonreturn device (1) comprising a body (2) defining an enclosure (5) intended to receive fuel, and having at least one opening (3), the enclosure (5) has an inner wall (6) extended by an elastic return member (8) forming an integral part with said inner wall (6), said elastic return member (8) is extended by a valve (9) forming an integral part with said elastic return member (8), the elastic return member (8) pushes the valve (9) into a position of closing the opening (3) to prevent the fuel present in the enclosure (5) from being discharged through the opening (3), **characterised in that**:
the device is manufactured, layer by layer and by additive manufacturing, such that the body (2), the elastic return member (8) and the valve (9) together form a single one-piece part;
the elastic return member (8) is a compression coil spring;
the opening (3) has an inclined peripheral wall, the valve (9) having a complementary inclined flange, the inner wall (6) having a tubular conformation along a central longitudinal axis (7), the enclosure (5) having a variable diameter along the device (1), the inner wall (6) having a seat (10) for the valve (9), the seat (10) of the valve (9) having an upstream conical conformation, with its larger diameter located downstream, the upstream portion of the valve (9) having a complementary conical conformation, the wall of the seat (10) and the complementary edge of the valve (9) defining an angle comprised between 30 and 60 degrees relative to the central axis (7).

2. The device (1) according to claim 1, **characterised in that** the body (2), the elastic return member (8) and the valve (9) are made of plastic material.

3. The device (1) according to claim 1, **characterised in that** the body (2), the elastic return member (8) and the valve (9) are made of metal.

4. The device (1) according to claim 1, **characterised in that** a seal is disposed in a seat (12) formed around the opening (3) or around the valve (9) to ensure the sealing between the valve (9) and the body (2).

5. The device (1) according to claim 1, **characterised in that** the inclined edge of the valve (9) has a peripheral annular groove forming the seat (12) of a seal.

6. The device (1) according to claim 1, **characterised in that** the body (2) has a tubular conformation defining an enclosure (5) between a downstream opening (4) and an upstream opening (3), the elastic return member (8) extending the inner wall (6) of the enclosure (5) from the downstream opening (4) and extends so that the valve (9) closes the upstream opening (3).

7. A method for manufacturing a fuel nonreturn device (1) according to one of claims 1 to 6, **characterised in that** it consists in manufacturing, layer by layer and by additive manufacturing, the body (2), the elastic return member (8) and the valve (9), such that the body (2), the elastic return member (8) and the valve (9) together form a single one-piece part, the device (1) being manufactured such that:
- the body (2) defines an enclosure (5) intended to receive fuel, and has at least one opening (3);
- the enclosure (5) has an inner wall (6) extended by the elastic return member (8);
- the elastic return member is extended by the valve (9) and pushes said valve (9) into a position of closing the opening (3) to prevent the fuel present in the enclosure (5) from being discharged through the opening (3).
